# EUROPEAN PATENT APPLICATION

(11) **EP 0 677 800 A2**
(43) Date of publication of application: **18.10.1995**
(21) Application number: 95105007.9
(22) Date of filing: 04.04.1995
(51) Int. Cl.: G05D 13/62

(54) **Electronic control system of washing water pressure**

(30) Priority: 15.04.1994 IT TO940296
(71) Applicant: MERLONI ELETTRODOMESTICI S.p.A., I-60044 Fabriano (AN) (IT)
(72) Inventor: Milano, Francesco, S. Pietro Val Lemina (TO) (IT)

(57) **Abstract**

The present invention refers to a dishwashing machine, particularly a household dishwasher, comprising a single-phase induction motor provided with a main winding and an auxiliary winding, said motor actuating a wash-pump.

The main characteristic of the present invention consists in the fact that the machine is provided with a system to change said motor speed, comprising an electronic module to control operation of a power actuator, which feeds electric power and is series connected with the motor main winding, whereas the motor auxiliary winding is electrically powered independently from the operation of said power actuator.

## Description

This invention refers to a dishwashing machine, particularly a household dishwasher, comprising a single-phase induction motor provided with a main winding and an auxiliary winding, said motor actuating a wash-pump.

According to the present state of the art, washing in a dishwasher is done by pressurized water supplied to rotating arms through a circulation pump; the water ejected through the holes provided in the arms causes the arms to rotate and will then hit the crockery to be washed.

In order to thoroughly wash the pans or other very dirty dishes a considerable water pressure and consequently a motor to actuate the pump at its utmost power capacity are required; viceversa, when washing delicate or light crockery (glasses, cups and saucers) it is advisable to use a lower water pressure to avoid that the objects may be lifted up by the water jet and fall back again with the risk of being damaged if not at all broken by the water jet force.

To this purpose some machines have been developed, which can wash with a differential pressure, eg. if equipped with two arms as usually done, one arm is fully powered and the other has a lower power by means of mechanical pressure reducing devices. However, since this method always requires the use of one arm for very dirty dishes and the other for delicate crockery, it is not a flexible but rather a rigid method.

Other machines have also been developed, wherein mechanical water control is possible by reducing the pipe flow to a larger or smaller extent, but these devices are difficult to use and less efficient.

It is the object of the present invention to indicate how to provide a relatively low-cost, efficient, versatile and practical-to-use water pressure control system for a dishwashing machine.

Accordingly, it is the object of the present invention to provide a dishwashing machine, particularly a household dishwasher, comprising a single-phase induction motor with a main winding and an auxiliary winding, said motor actuating a wash-pump, characterized in that said machine is provided with a system to change said motor speed, comprising an electronic module to control operation of a power actuator, which feeds electric power and is series connected with the motor main winding, whereas the motor auxiliary winding is directly powered from the mains, independently from the operation of said power actuator.

The invention is based on the following considerations.

Due to space and cost requirements, the wash-pump in a dishwashing machine is usually actuated by an electric single-phase induction motor. Said motors comprise a main winding and an auxiliary winding (also called starting winding), containing a phase displacement capacitor to form a rotary electromagnetic field, being required to allow motor start-up and a better efficiency with nominal load.

A speed control for said type of motor is theoretically possible by changing its feed voltage; however, such a speed control system has the disadvantage that the already critical static torque of the motor is further reduced, thus causing a stall risk.

It is the object of the inventive innovation to change only the voltage applied to the main winding, while feeding full voltage all the time to the auxiliary winding, which can thus avoid a stall risk during the start-up stage.

The characteristics and advantages of the control system according to the present invention will be apparent from the following description referring to the attached drawings, which are supplied only as an explanatory and not limiting example, wherein:
- Fig. 1 shows schematically a basic electric diagram of a conventional two-pole single-phase induction motor provided with a main winding and an auxiliary winding and a speed control circuit connected with it according to the present invention;
- Fig. 2 shows schematically a detailed electric diagram plan of the control circuit shown in Fig. 1.

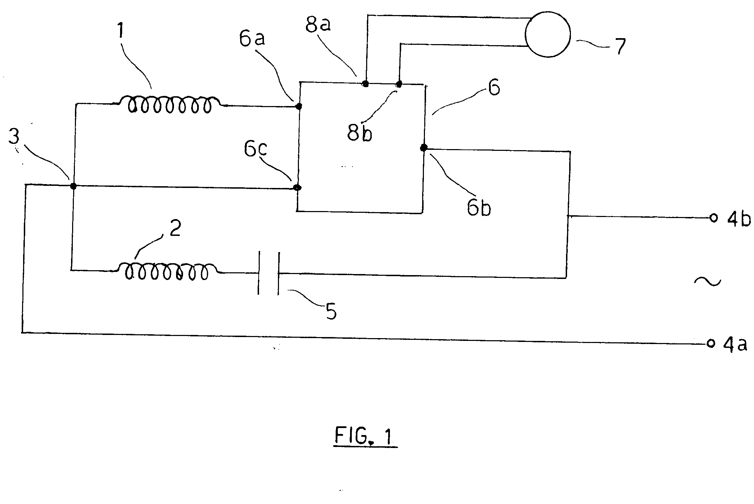

In Fig. 1, which shows a wiring plan of a conventional two-pole single-phase induction motor provided with a main winding and an auxiliary winding and a speed control circuit connected with it, reference number 1 indicates the motor main winding, reference number 2 indicates the motor auxiliary winding, wherein said windings have a common terminal 3 connected with a terminal 4a being a part of a couple of terminals 4a and 4b, where an alternate current (mains) is fed to, reference number 5 indicates a capacitor in series with the auxiliary winding 2, reference number 6 indicates a control circuit with three terminals indicated with 6a, 6b and 6c respectively.

Terminal 6a is connected with the main winding 1 terminal, which is not connected with the common point 3 of both windings; terminal 6b is connected with the capacitor terminal 5 and also with the feed terminal 4b; terminal 6c is connected with common terminal 3 for windings 1 and 2. Reference number 7 indicates a speedometer dynamo assembled on the motor and connected with two further terminals 8a and 8b of circuit 6.

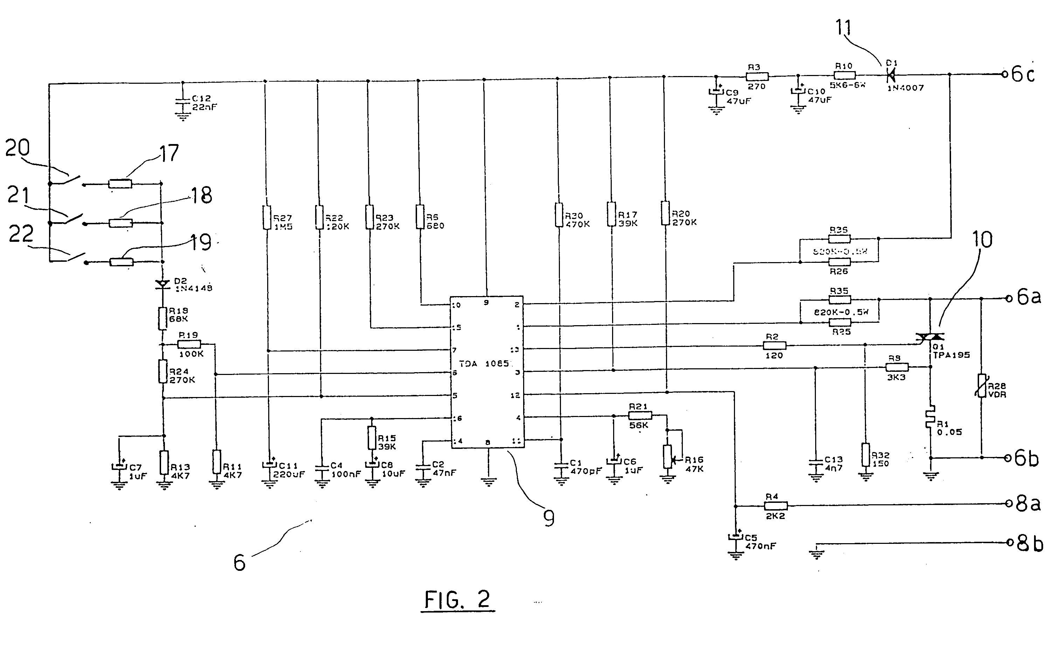

In Fig. 2, which shows the wiring plan of control circuit 6 in fig. 1, reference number 9 indicates an integrated circuit executing a large number of the motor control functions and available on the market under denomination TDA 1085; reference number 10 indicates a triac, which is a power actuating element capable of controlling the voltage fed to the motor main winding 1; therefore, triac 10 is connected between terminals 6a and 6b and its control electrode is connected with terminal 13 of integrated circuit 9.

Reference number 11 indicates a rectifying diode to convert the mains alternate current to direct current to feed integrated circuit 9; reference numbers 17, 18 and 19 indicate resistors of different values to each other, which can be inserted by their relevant switches 20, 21 and 22 between the feed voltage obtained starting from diode 11 and the relevant circuit 9 terminals.

Since the characteristics of the elements mentioned above are known and the description and functions of integrated circuits TDA 1085 can be easily obtained from the relevant manufacturers' data-sheets, the control circuit operation is as follows.

When the motor runs, speedometer dynamo 7 generates a voltage proportional to the motor speed, which is transferred to integrated circuit 9 through terminals 8a and 8b of control circuit 6.

Said voltage is processed inside integrated circuit 9 through the comparison with a reference voltage obtained in a usually known manner, related to the speed to be reached by the motor.

As a result of said comparison a signal is generated, which is used to verify the conduction of triac 10 and consequently to bring the motor speed to the desired value, therefore, the voltage generated by the speedometer dynamo is compared with the reference voltage, which corresponds to the value of the programmed motor speed.

In case of discrepancy between the two voltages, and consequent discrepancy between the real speed and programmed speed, the exact value of the latter will be restored through the piloting element.

A higher or a lower voltage will in fact be transferred to the motor through triac 10, according to whether the speed is lower or higher than required.

When the motor is started, integrated circuit 9 receives a signal equal to 0 from the speedometer dynamo 7 and supplies the motor main winding through triac 10 with the max voltage required for a sufficient static torque to let the motor start.

As long as the motor starts running, integrated circuit 9 starts receiving a signal from speedometer dynamo 7, which changes with the increasing number of motor revolutions.

Once the signal received by the integrated circuit equals the predetermined speed, the integrated circuit will provide through the triac to maintain a voltage to the motor main winding being capable of keeping a consistent speed.

When a different motor speed is desired to be set, one of the resistors indicated with 17, 18 and 19 is inserted by its relevant switch, actuated by the timer of the machine according to the selection of a specific wash-program, or manually on the control panel.

The insertion of the resistor changes the reference voltage of integrated circuit 9, bringing it to a value that is equal to different motor speed.

Thus, integrated circuit 9 will compare the signal received from the speedometer dynamo with the new reference value and supply the motor through triac 10 with a voltage suitable to maintain the new set speed.

The speed control system operation of an induction motor according to the present invention is clear from the above description and attached drawings.

As it is apparent from the above description, the motor speed control system actuating the wash-pump of a dishwashing machine according to the present invention has the following advantages:
- capability of setting a number of different motor speeds and consequently a number of different washing pressures;
- set speed (i:e: number of revolutions) remains consistent also when the mains voltage varies (within foreseen limits);
- set speed remains consistent also when the motor temperature changes;
- the motor always starts with a max static torque for any set speed;
- motor output or efficiency remains substantially consistent and approaching the max values for any set speed;
- capability of selecting different speeds through the programmer;
- capability of a washing cycle for delicate crockery with washing jets having a reduced pressure using only one motor and one wash-pump;
- capability of reducing water consumption by decreasing the motor speed, as the circulating water volume is in function of the pump speed controlled by the motor.

It is obvious that many changes - without prejudice to the principle of the present invention - are possible to the manufacturing characteristics of the rotating speed control system of a motor actuating the pump of a dishwashing machine described by way of example, without departing from the novelty spirit of the innovative solution, and it is also clear that in practical actuation of the invention the components may often differ in form and size from the ones described and be replaced with technical equivalent elements.

## Claims

1. Dishwashing machine, particularly a household dishwasher, comprising a single-phase induction motor provided with a main winding (1) and an auxiliary winding (2), said motor actuating a wash-pump, characterized in that the machine is provided with a system to change said motor speed, comprising an electronic module (6) to control operation of a power actuator (10), which feeds electric power and is series connected with the motor main winding (1), whereas the motor auxiliary winding (2) is electrically powered independently from the operation of said power actuator (10).

2. Dishwashing machine according to Claim 1, characterized in that a speedometer dynamo (7) is assembled on said motor to supply a voltage in function of said motor speed.

3. Dishwashing machine according to Claim 1, characterized in that a full value voltage is applied to the motor main winding (1) at start-up.

4. Dishwashing machine according to Claim 1, characterized in that the voltage applied to the motor auxiliary winding (2) is maintained all the time at its full value.

5. Dishwashing machine according to Claim 1, 2 or 3, characterized in that said power actuator (10) is controlled by an integrated circuit (9), which processes the voltage generated by the speedometer dynamo (7) and compares it with a predetermined value which corresponds to a given motor speed value.

6. Dishwashing machine according to Claim 4, characterized in that means (17, 18, 19, 20, 21, 22) are provided to set the reference value of the integrated circuit (9) for comparison with the voltage generated by the speedometer dynamo and consequent setting of the motor rotating speed.

7. Dishwashing machine according to Claim 5, characterized in that said means comprise resistors (17, 18, 19) with a different value to each other.

8. Dishwashing machine according to Claim 5, characterized in that said means comprise switches (20, 21, 22) controlled by a programmer or manually.

9. Dishwashing machine according to one or more of the previous Claims, characterized in that the integrated circuit (9) controls operation of the power actuator (10) in such a way that the predetermined motor speed does not change if the feed voltage is changed.

10. Dishwashing machine according to one or more of the previous Claims, characterized in that the integrated circuit (9) controls the operation of the power actuator (10) in such a way that the predetermined motor speed does not change if the motor temperature is changed.

11. Dishwashing machine according to one or more of the previous Claims, characterized in that by reducing the motor speed the quantity of circulating washing water is reduced.
